# EUROPÄISCHE PATENTANMELDUNG

(11) **EP 1 707 951 A1**
(43) Veröffentlichungstag der Anmeldung: **04.10.2006**
(21) Anmeldenummer: 06003474.1
(22) Anmeldetag: 21.02.2006
(51) Int. Cl.: G01N 27/414

(54) **Gassensitiver Feldeffekttransistor zur Detektion von Schwefelwasserstoff**

(30) Priorität: 31.03.2005 DE 102005014768
(71) Anmelder: Micronas GmbH, 79108 Freiburg i. Br. (DE)
(72) Erfinder: Eisele, Ignaz, Prof., 82057 Icking (DE); Freitag, Gunter, 81735 München (DE); Fleischer, Maximilian, Dr., 85635 Höhenkirchen (DE); Knittel, Thorsten, 93080 Pentling (DE); Lampe, Uwe, Dr., 21614 Buxtehude (DE); Meixner, Hans, Prof., 85540 Haar (DE); Pohle, Roland, Dr., 85570 Herdweg (DE); Simon, Elfriede, Dr., 80639 München (DE)
(74) Vertreter: Patentanwälte Westphal, Mussgnug & Partner

(57) **Zusammenfassung**

Gassensitiver Feldeffekttransistor zur Detektion von H₂S mit einer abgehobenen Gateelektrode (9) und einem Luftspalt (4) zwischen Gateelektrode (9) und Transistorisolierung (7) mit einer gassensitiven Schicht (1) auf der Gateelektrode, deren Potentialänderung bei vorhandenem Zielgas aufgrund von Austrittsarbeitsänderungen an der sensitiven Schicht durch den Transistor auslesbar sind, wobei die gassensitive Schicht aus entweder SnO₂ oder aus Silber, silberhaltigem Material oder silberoxidhaltigem Material oder aus einem Gemisch daraus besteht.

## Beschreibung

Die Erfindung betrifft einen Gassensor zur Detektion von Schwefelwasserstoff (H₂S).

Die Detektion von Schwefelwasserstoff in der Umgebungsluft ist aufgrund der toxischen Eigenschaften dieses Gases sinnvoll. Um diese Messungen jedoch akzeptabler zu gestalten, muss die ausreichende Selektivität mit einfach aufgebauten Sensoren kombiniert werden.

Käufliche Gassensoren für Schwefelwasserstoff basieren bisher in der Regel auf elektrochemischen Zellen, die bei relativ hohem Preis lediglich eine kurze Lebensdauer aufweisen und darüber hinaus hohe Konzentrationen nur bedingt messen können. Schwefelwasserstoff an sich ist ein hochtoxisches Gas, was darüber hinaus übel riecht. Werte für die maximale Arbeitsplatzkonzentration (MAK) liegen bei 10 vpm mit momentanem Spitzenwert von 20 vpm. Dieses Gas entsteht bei der Zersetzung von biologischem Material und der übliche Geruch von Gülle kann zum Teil auf Schwefelwasserstoff zurückgeführt werden. Schwefelwasserstoff tritt daher in Kläranlagen für Abwässer oder in landwirtschaftlichen Betrieben mit Massentierhaltung auf. Es hat vorwiegend biologischen Ursprung und ist somit auch Bestandteil des primär geförderten Erdgases und des Rohöles, so dass Schwefelwasserstoff auch in Raffinerien auftritt. Schwefelwasserstoff und Sulfide wie Natriumsulfid werden für einige industrielle Prozesse als chemisches Reagenz eingesetzt. Ein Beispiel dafür ist der Sulfatprozess der Zellstoffproduktion.

Wegen der niedrigen Geruchsschwelle wird Schwefelwasserstoff bereits in sehr kleinen Konzentrationen wahrgenommen, so dass es auch als Leitgas für die Luftgüte herangezogen werden kann, beispielsweise bei der Regelung für Kraftfahrzeugklimaanlagen.

Für viele Anwendungen werden preisgünstige Sensoren verlangt, die zwar nur sehr niedrige Schwellwerte bei der Ermittlung der H₂S-Konzentration berücksichtigen sollen, dies jedoch mit hoher Selektivität und Reproduzierbarkeit. Der Leistungsbedarf soll derart gering sein, dass ein mehrmonatiger Batteriebetrieb bzw. direkter Anschluss beispielsweise ohne Hilfsenergie an eine Datenbusleitung möglich ist.

Aufgrund der hohen Bedeutung für die Sicherheit und aufgrund des breiten Einsatzbereiches der Schwefelwasserstoffmessungen sind bereits heute eine große Zahl unterschiedlicher Messsysteme im Einsatz. Verwendet werden sensitive elektrochemische Zellen. Deren Preis ist jedoch für viele Anwendungen viel zu hoch. Darüber hinaus benötigen darauf aufgebaute Sensorsysteme einen hohen Wartungsaufwand. Die Lebensdauer der einzelnen Sensoren ist relativ kurz. Im unteren Preissegment sind die Metalloxidsensoren vertreten. Deren Reaktion auf ein Zielgas wird über Leitfähigkeitsänderungen entsprechend ausgelesen. Diese Sensoren werden jedoch bei höheren Temperaturen betrieben wie beispielsweise oberhalb von 200° C. Somit benötigen derartige Sensoren eine hohe Leistung, um die Betriebstemperatur zu erreichen. Daraus folgt direkt, dass derartige Sensoren für viele Anwendungsfälle, wie beispielsweise Brandschutz oder viele batteriebetriebene Systeme oder für den direkten Anschluss an einen Datenbus nicht geeignet sind. Allgemein können Schwefelwasserstoffsensoren bisher größtenteils nur dort eingesetzt werden, wo eine ausreichende elektrische Energiezufuhr verfügbar ist.

Aufgrund gesetzlicher Auflagen wird der Einsatz von Schwefelwasserstoffsensoren jedoch ständig erhöht. Dabei bestehen im Wesentlichen Nachteile durch hohe Sensorkosten durch die Versorgung der Sensoren mit der erforderlichen Betriebsenergie und ähnliches. Außerhalb von gesetzlich vorgeschriebenen Anwendungsfällen werden aus den genannten Gründen Schwefelwasserstoffsensoren in der Praxis lediglich dann eingesetzt, wenn dies beispielsweise für die Regelung von Geräten oder Anlagen unabdingbar ist und die Betriebsenergie ohne weiteren Aufwand zur Verfügung steht. Sobald diese Bedingungen nicht erfüllt sind, wird auf die Verwendung von Schwefelwasserstoffsensoren verzichtet, auch wenn dies zum Beispiel aus Sicherheitsgründen wünschenswert wäre. Gassensoren, die die Änderung der elektronischen Austrittsarbeit bzw. deren Veränderung an Materialien bei der Wechselwirkung mit zu detektierenden Gasen als sensitives Messprinzip nutzen, sind geeignet, bei niedrigen Temperaturen und damit niedrigem Energieaufwand betrieben zu werden. Es wird die Möglichkeit ausgenutzt, die Änderung der Austrittsarbeit von gassensitiven Materialien in einem Feldeffekttransistor (GasFET) einzukoppeln und dadurch die Änderung der Austrittsarbeit als Änderung des Stromes zwischen Source und Drain des Transistors zu messen.

Im Wesentlichen werden zwei Transistortypen als so genannte GasFET eingesetzt. Dies ist zum einen der so genannte Suspended Gate Fieldeffect Transistor (SGFET) und der Capacitively Controlled Fieldeffect Transistor (CCFET). Beide sind gekennzeichnet durch den hybriden Aufbau, der ein relativ einfaches und zuverlässiges Aufbauprinzip begründet. So kann hier durch eine abgehobene Gateelektrode unter Ausbildung eines Luftspaltes zwischen Gateelektrode und Transistorisolierung dieses gasempfindliche mit der gassensitiven Schicht belegte Gate (Elektrode) einerseits und der eigentliche Transistor andererseits getrennt hergestellt werden, wobei die Vollendung des Aufbaus beispielsweise durch FlipChip-Technologie eine Verbindung beider Elemente unter gleichzeitig genauer gegenseitiger Positionierung ermöglicht. Ein Vorteil, der durch diese hybride Aufbautechnik direkt erzielbar ist, liegt in der Einsatzmöglichkeit vieler Materialien als gassensitive Schicht, wobei diese Materialien in der Regel aufgrund ihrer artfremden Zusammensetzung nicht mit den beispielsweise Siliziumkomponenten eines Feldeffekttransistors kombinierbar wären. Dies trifft insbesondere auf Metalloxide zu, die in Dick- oder Dünnschichttechnologie aufgebracht werden können.

Aufgabe der Erfindung ist die Bereitstellung eines einfach aufgebauten Schwefelwasserstoffsensors, der mit geringer Betriebsenergie einsetzbar ist. Die Lösung dieser Aufgabe geschieht durch die Kombination der Merkmale entsprechend Anspruch 1. Vorteilhafte Ausgestaltungen sind den Unteransprüchen zu entnehmen.

Die Erfindung beruht auf der Kombination von Feldeffekttransistoren zur Auslesung der Austrittsarbeit an gassensitiven Schichten. Die dabei entstehenden gassensitiven Feldeffekttransistoren weisen Betriebstemperaturen auf, die zwischen Raumtemperatur und 100° C liegen. Gewisse Temperaturschwankungen oder Temperaturerhöhungen sind notwendig, um reversible Änderungen ablaufen zu lassen. Die resultierende geringe Betriebstemperatur ermöglicht die Kombination mit auf Schwefelwasserstoff ansprechende gassensitiven Schichten einen Gassensor, der die geforderten Bedingungen erfüllt. Nachdem für gassensitive Feldeffekttransistoren bisher keine gassensitiven Schichten zur Detektion von Schwefelwasserstoff bekannt waren und beispielsweise Zinnoxid (SnO₂) in Leitfähigkeitssensoren eingesetzt wurde, ist erkannt worden, dass Zinnoxid als gassensitives Material für Schwefelwasserstoff in Frage kommt. Nachdem Silber und Silberoxid oder entsprechende Mischungen daraus bei Kontakt mit Schwefelwasserstoff Silbersulfid bilden und dieser Prozess durch Temperaturzufuhr wieder umkehrbar ist, können Schichten aus Silber, Silberoxid oder Mischungen daraus ebenfalls für gassensitive Schichten, deren Signal nach dem Prinzip der Austrittsarbeitsänderung auswertbar ist, eingesetzt werden. Verbunden damit ist die Betrachtung, dass Silbersulfid eine andere Austrittsarbeit besitzt wie Silber oder Silberoxid. Somit kann die Austrittsarbeitsdifferenz mit Hilfe eines Gassensors auf Feldeffektbasis ausgelesen und als Gassignal interpretiert werden.

Die Möglichkeit, das Material einer gassensitiven Schicht aus einer Mischung verschiedener Metalloxide darzustellen, ergibt den Vorteil, dass zahlreiche und breit einsetzbare verschiedenartige gassensitive Schichten zur Verfügung stehen. Diese Schichten können vorzugsweise in Dickschichttechnik mit einer Schichtdicke von beispielsweise 5 bis 10 µm hergestellt werden.

Der Vorteil geringerer Heizenergie durch den Einsatz eines Feldeffekttransistors zum Auslesen eines Gassignales bei dem beschriebenen Detektionsprinzip ergibt sich durch die nicht mehr notwendige Beheizung von gassensitiven Schichten auf beispielsweise 500° C oder höher. Der Betriebstemperaturbereich von erfindungsgemäßen gassensitiven Feldeffekttransistoren, der zwischen Raumtemperatur und 100° oder 200° C liegen kann, erfordert jedoch für die Anhebung der Temperatur über die Raumtemperatur hinaus in besonderen Fällen auch eine Heizung.

Die Anwendungs- und Einsatzgebiete von Schwefelwasserstoffsensoren sind zahlreich, wobei aktuelle Probleme durch den vorteilhaften Einsatz der erfindungsgemäßen GasFETs in den Bereichen wie Kraftfahrzeugklimaanlage, Raumluftgüteüberwachung, Batteriebetrieb von Geräten, insbesondere mobilen Geräten, und vernetzte Systeme, die Gassensoren über Datenbusleitungen organisieren, gelöst werden können.

Im Folgenden werden anhand von schematischen, die Erfindung nicht einschränkenden Figuren Ausführungsbeispiele beschrieben.
- Figur 1: zeigt den schematischen Aufbau eines GasFETs in der speziellen Ausführung eines SGFET,
- Figur 2: zeigt eine geschnittene Darstellung eines CCFET,
- Figur 3: zeigt die Austrittsarbeitsänderung an einer SnO₂₋Dickschicht bei Exposition an H₂S,
- Figur 4: zeigt die Austrittsarbeitsänderung an einer Silber-schicht in einem H₂S-Sensor bei 100° C und 20% rela-tiver Luftfeuchte.

Durch die Erfindung ergeben sich insbesondere folgende Vorteile:
- Der Betrieb mit geringem Energieverbrauch, insbesondere der Batteriebetrieb oder der direkte Anschluss an Datenbusleitungen wird ermöglicht,
- die geringe geometrische Größe, die eine Realisierung von Sensoranordnungen erleichtert, kann dargestellt werden,
- die mögliche monolithische Integration der Elektronik in den Sensorchip kann realisiert werden,
- die Verwendung ausgereifter kostengünstiger Verfahren der Halbleiterfertigung ist zur Herstellung eines entsprechenden GasFETs möglich.

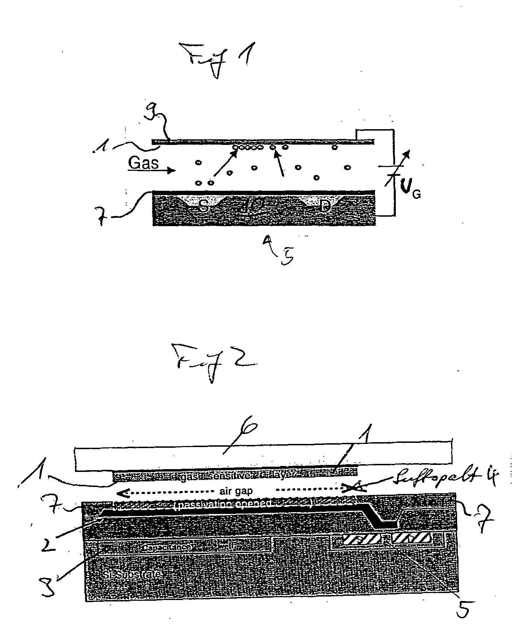

Figur 1 zeigt den Grundaufbau eines Gassensors mit abgehobenem Gate, wobei die sensitive Schicht 1 auf der Gateelektrode 9 aufgebraucht ist. Die Gateisolierung 7 gehört zum Basistransistoraufbau bestehend aus Transistorkanal 10 sowie benachbarter so genannter Source und Drain. Die Spannung U_{G} ist die so genannte Gatespannung, die im Zusammenhang mit einem Sensorsignal ausgebildet wird.

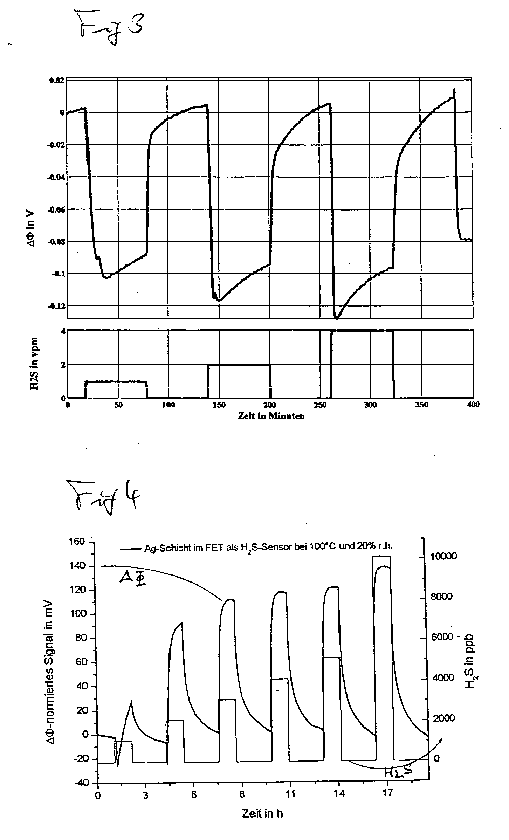

Figur 2 zeigt einen CCFET, der ebenfalls ein abgehobenes Gate beinhaltet. In diesem Fall ist ein Luftspalt 4 analog zur Figur 1 für die Durchströmung des Messgases vorhanden, wobei angrenzende Schichten zum einen die Isolierung 7 und zum anderen die gassensitive Schicht 1 sind. Die gassensitive Schicht ist in diesem Fall auf dem Substrat 6 aufgebracht. Das im Bereich der gassensitiven Schicht vorhandene Potential kann auf den darunter liegenden Transistoraufbau übertragen werden. Im Falle des CCFET überträgt das so genannte Floating Gate bzw. die Floating Gateelektrode 2 (potentialfreie Elektrode) das Potential zum seitlich verlagerten Auslesetransistor 5. Eine Referenzelektrode 3, auch bezeichnet als Capacitance Well schirmt die Floating Gateelektrode 2 ab.

An der sensitiven Schicht, mit der im Falle des SGFET die Unterseite der abgehobenen Gateelektrode beschichtet ist, entsteht bei Präsenz des zu detektierenden Gases ein elektrisches Potential, das der Änderung der Austrittsarbeit des sensitiven Materiales entspricht. Dies liegt typischerweise zwischen 50 und 100 mV. Dieses Potential wirkt auf den Kanal der FET-Struktur und verändert den Source-Drain-Strom. Ausgelesen wird der geänderte Source-Drain-Strom direkt. Alternativ wird durch Anlegen einer zusätzlichen Spannung an das abgehobene Gate oder an die Transistorwanne (U_{W}) die Änderung des Source-Drain-Stromes zurückgestellt. Dabei stellt die zusätzlich angelegte Spannung des Auslesesignal dar, welches mit der Austrittsarbeitsänderung der sensitiven Schicht direkt korrespondiert.

Systeme, in denen Schwefelwasserstoff auftritt, weisen als Randbedingung in der Regel eine endliche Luftfeuchtigkeit auf. Das Sensorsystem ist, je nach Auslegung, auf Raumtemperatur bzw. auf Temperaturen bis 100 °C aufzuheizen. In der Regel ergibt sich eine reversible Änderung der Elektronenaustrittsarbeit, wie es beispielsweise in den Figuren 3 und 4 gezeigt wird. Die Änderung der Elektronenaustrittsarbeit liegt für den relevanten Gaskonzentrationsbereich der oben genannten Anwendungen bei etwa 10 bis 100 mV und ist damit ausreichend groß, um mit Hybrid aufgebauten gassensitiven Feldeffekttransistoren ausgelesen zu werden. Allgemein ergibt sich die Funktionsweise der angeführten Schichten durch vorhandene Adsorption von zu detektierenden Molekülen auf dem Metalloxid.

Figur 3 zeigt ein Sensorsignal über 400 Minuten, wobei im unteren Bereich des Diagrammes die Exposition mit Schwefelwasserstoff in vpm dargestellt ist und im oberen Bereich des Diagrammes das entsprechende Sensorsignal, welches zeitlich exakt mit den unteren quasi Ein-Ausschaltvorgängen korrespondiert.

Figur 4 zeigt ein Diagramm, in dem über die Zeit sowohl ein Sensorsignal als auch die intervallartige Exposition mit Schwefelwasserstoff in PPB aufgetragen sind. Für Figur 4 gilt, dass die gassensitive Schicht aus Silber besteht, der Sensor bei 100° C betrieben wird und die relative Luftfeuchtigkeit 20% beträgt.

Als besonders geeignete Metalloxide für die Detektion von Schwefelwasserstoff sind somit SnO₂ bzw. Silber, silberhaltiges Material oder silberoxidhaltiges Material zu nennen. Diese Materialien weisen eine sehr hohe Stabilität in diversen Umgebungsbedingungen auf. Es können auch Mischungen unterschiedlicher Metalloxide vorteilhaft eingesetzt werden, wobei mindestens ein Anteil einer der oben genannten Stoffe mit enthalten sein muss.

Die Materialien werden als Schichten präpariert, wobei sowohl Kathodenzerstäubung, Siebdruckverfahren, als auch CVD-Verfahren eingesetzt werden können. Typische Schichtdicken sind im Bereich zwischen 5 und 10 µm stark. Besonders vorteilhaft ist die Anwendung einer porösen offenporigen Schicht aus einem der oben genannten Stoffe. Die Präparation von Silber, silberhaltigen oder silberoxidhaltigen Materialien in einem Gassensor zur Schwefelwasserstoffdetektion erweitert die Palette der Materialien für gassensitive Schichten, die in gassensitiven Feldeffekttransistoren verwendet werden. Neben der kostengünstigen Herstellung der Sensoren sind deren selektive und reproduzierbare Signale zu nennen. Die Beheizung der Schicht ist teilweise erforderlich, damit nach der Gasbeaufschlagung eine Rückkehr zu einem Ursprungswert möglich ist. Der Betrieb des Sensors bei Raumtemperatur zeigt ein integrierendes Verhalten, wobei ab 100° C die Reaktion im Feldeffekttransistor voll reversibel ist. Bei höheren Temperaturen reduziert sich allgemein der Signalpegel.

Die Funktionsweise der Gassensoren auf FET-Basis ist allgemein bekannt.

Somit stehen durch die Erfindung kostengünstige Schwefelwasserstoffsensoren mit geringem Energiebedarf zur Verfügung, die durch ihre vorteilhaften Eigenschaften viele Einsatzgebiete bzw. Verwendungen abdecken. Insbesondere zum Einsatz als gassensitive Schicht an einem FET-Sensor ist bislang kein Material hervorgehoben worden.

Messungen mit einer Kelvin-Sonde wurden durchgeführt, um die Hypothese zu bestätigen, dass eine Schwefelwasserstoffdetektion bei Temperaturen deutlich unterhalb der Betriebstemperaturen von Leitfähigkeitssensoren möglich ist. Dies geschieht durch den Einsatz von gassensitiven Feldeffekttransistoren, wobei eine besondere Auswahl der Materialien für die gassensitive Schicht in Form der Zinnoxidschicht oder der Schicht aus Silber, silberhaltigem Material oder silberoxidhaltigem Material vorliegt.

Für Versuche wurde eine Kelvinprobe hergestellt, zum einen auf der Basis einer Zinnoxid-Dickschicht, die bei 600° C eingebrannt wird und eine Pastenzusammensetzung von 50 Gew.-% Zinnoxidpulver und 50 Gew.-% Binder (Ethylzellulose/Terpinol) aufweist. Die Kelvin-Messungen wurden im Temperaturbereich von Raumtemperatur bis 110° C an feuchter synthetischer Luft durchgeführt. Figur 3 zeigt das Ergebnis bei ca. 70° C bei der Detektion von Schwefelwasserstoff zwischen 1 und 4 vpm. Die Messung zeigt, dass mit dieser sensitiven Schicht bei niedrigen Temperaturen Schwefelwasserstoff mit hoher Empfindlichkeit zu detektieren ist.

## Patentansprüche

1. Gassensitiver Feldeffekttransistor zur Detektion von H₂S mit einer abgehobenen Gateelektrode (9) und einem Luftspalt (4) zwischen Gateelektrode (9) und Transistorisolierung (7) mit einer gassensitiven Schicht (1) auf der Gateelektrode, deren Potentialänderung bei vorhandenem Zielgas aufgrund von Austrittsarbeitsänderungen an der sensitiven Schicht durch den Transistor auslesbar sind, wobei die gassensitive Schicht entweder aus SnO₂ oder aus Silber, silberhaltigem Material oder silberoxidhaltigem Material oder aus einem Gemisch daraus besteht.

2. Gassensitiver Feldeffekttransistor nach Anspruch 1, bei dem die gassensitive Schicht aus Mischungen unterschiedlicher Metalloxide besteht.

3. Gassensitiver Feldeffekttransistor nach Anspruch 1 oder 2, bei dem die Schichtdicken der gassensitiven Schicht zwischen 5 und 10 µm stark sind.

4. Gassensitiver Feldeffekttransistor nach einem der Ansprüche 1 bis 3, bei dem die Betriebstemperatur zumindest der gassensitiven Schicht durch eine elektrische Heizung einstellbar ist.

5. Gassensitiver Feldeffekttransistor nach einem der Ansprüche 1 bis 4, der zur H₂S nachweisen kann und in einem mobilen batteriebetriebenen Gerät eingebaut ist.

6. Verwendung eines gassensitiven Feldeffekttransistors zur Detektion von H₂S, der entsprechend der Ansprüche 1 bis 5 aufgebaut ist, zur Überwachung oder Regelung von Kraftfahrzeugklimaanlagen oder der Luftgüte in Aufenthaltsräumen.

7. Verwendung eines gassensitiven Feldeffekttransistors zur Detektion von H₂S, der entsprechend der Ansprüche 1 bis 5 aufgebaut ist, zum Einsatz in vernetzten Systemen.
